# EUROPÄISCHE PATENTSCHRIFT

(11) **EP 2 873 497 B1**
(45) Veröffentlichungstag und Bekanntmachung des Hinweises auf die Patenterteilung: **24.05.2017**
(21) Anmeldenummer: 14191808.6
(22) Anmeldetag: 05.11.2014
(51) Int. Cl.: B25J 15/00, B25J 15/02, B25J 15/08

(54) **Greifvorrichtung zum Ergreifen und Absetzen von Objekten entlang mindestens einer Bewegungsachse**
Gripping device for gripping and depositing objects along at least one axis of movement
Dispositif de préhension pour saisir et déposer des objets le long d'au moins un axe de mouvement

(30) Priorität: 08.11.2013 DE 102013112312
(43) Veröffentlichungstag der Anmeldung: 20.05.2015
(73) Patentinhaber: Askion GmbH, 07549 Gera (DE)
(72) Erfinder: Bürgermeister, Daniel, 08058 Zwickau (DE)
(74) Vertreter: Oehmke, Volker

(56) Entgegenhaltungen:
- EP-A2- 1 785 238
- FR-A- 1 592 351
- JP-A- H07 256 583

## Beschreibung

Die Erfindung betrifft eine Greifvorrichtung zum Ergreifen und Absetzen von Objekten entlang mindestens einer Bewegungsachse.

Aus dem Stand der Technik ist das Prinzip bekannt, dass Elemente von Greifvorrichtungen durch erste Magnetkräfte in einer bestimmten Position gehalten werden können und dass die ersten Magnetkräfte durch die Wirkung zweiter Magnetkräfte aufgehoben werden können. Nach einer Aufhebung der ersten Magnetkräfte können die Elemente der Greifvorrichtung eine andere Position einnehmen.

Das oben umrissene Prinzip ist beispielsweise in der EP 1 785 238 A2 genutzt, um Greifmittel (fortan auch: Greiffinger) mittels eines Verbindungsmittels an Greifbacken zu halten. Dabei beinhaltet das Verbindungsmittel einen Permanentmagneten und einen bestrombaren Elektromagneten. Ist der Elektromagnet unbestromt, wird das Greifmittel durch Wirkung einer ersten Magnetkraft des Permanentmagneten an der Greifbacke gehalten. Wird der Elektromagnet bestromt, geht von diesem eine zweite Magnetkraft aus, durch welche die erste Magnetkraft aufgehoben wird. Das Greifmittel wird nicht mehr an der Greifbacke gehalten und abgetrennt.

In einer Greifvorrichtung gemäß der DE 10 2005 005 805 B3 ist das genannte Prinzip zur Ansteuerung eines Greifelements einer Greifvorrichtung eingesetzt. Dabei ist durch das Greifelement ein magnetisch leitfähiger Kippanker gebildet, der zwischen zwei Anschlägen kippbar ist. Dem Kippanker sind zudem ein Permanentmagnet und eine in Spulenabschnitte unterteilte Spule zugeordnet. Je nach der Richtung der Bestromung der Spulenabschnitte ist das Greifelement zwischen den Anschlägen verkippbar. Da durch jeden Verkippungszustand ein Greifzustand (z. B. geöffnet oder geschlossen) realisiert ist, kann das Greifelement in gewünschter Weise angesteuert werden.

In der EP 2 532 611 A1 ist eine Greifvorrichtung mit Greifeinheit und Greiffingern beschrieben, die entlang einer Bewegungsachse beweglich ist. Die Greiffinger sind von einer Feder angefedert und durch diese entweder zusammen- oder auseinandergedrückt. Die Greiffinger weisen ein Element auf, das durch eine wirkende erste Magnetkraft mit einem Betätigungselement der Greifvorrichtung wechselwirkt. Das Element kann ein Permanentmagnet sein, während das Betätigungselement durch eine elektrische Spule gebildet ist. Durch eine Bestromung der elektrischen Spule bzw. durch eine Abschaltung der Bestromung kann eine zweite Magnetkraft erzeugt werden, die aufgrund ihrer Wechselwirkung mit der ersten Magnetkraft ein Öffnen und Schließen der Greifvorrichtung auslöst. Dabei wird das Element an den Greiffingern in die elektrische Spule hineingezogen bzw. aus dieser herausgeführt, wobei die Stellung der Greiffinger verändert wird. Durch die Änderung der Stellung der Greiffinger ist ein Öffnen bzw. ein Schließen der Greifvorrichtung bewirkt. Eine gezielte Bewegung entlang der Bewegungsachse ist durch die Greifvorrichtung nicht vorgesehen. Auch wird ein Objekt von außen her ergriffen und gehalten. Die beschriebene Greifvorrichtung ist nicht für Objekte geeignet, die an einem freien Innendurchmesser zu ergreifen und zu halten sind.In der JP H07 256583 A ist eine andere Greifvorrichtung mit Greifeinheit und Greiffingern beschrieben.
Mit den Lösungen gemäß dem Stand der Technik sind keine Greifvorrichtungen darstellbar, die zum Ergreifen und Absetzen von Objekten entlang einer Bewegungsachse geeignet sind. Insbesondere sind keine Lösungen bekannt, mit denen Objekte ergriffen und abgesetzt werden können, die an einem freien Innendurchmesser, beispielsweise am Innendurchmesser einer Kappe mit erhöhtem Rand, zu ergreifen sind.

Der Erfindung liegt die Aufgabe zugrunde, eine Möglichkeit zum Ergreifen und Absetzen von Objekten vorzuschlagen. Insbesondere soll durch die Erfindung eine Möglichkeit aufgezeigt werden, Objekte an einem freien Innendurchmesser eines Objektbestandteils zu ergreifen.

Die Aufgabe wird in einer Greifvorrichtung zum Ergreifen und Absetzen von Objekten entlang mindestens einer Bewegungsachse gelöst, wobei die Greifvorrichtung folgende Elemente aufweist:
- eine Greifeinheit mit mindestens zwei Greiffingern und Koppelgliedern zur Zustellung der Greiffinger in einer Zustellrichtung im Wesentlichen senkrecht zur Bewegungsachse,
- eine koaxial zur Bewegungsachse gerichtete Führungshülse, an deren erstem Ende die Greifeinheit angeordnet ist und deren zweites Ende mit einer wenigstens teilweise aus einem magnetischen Material bestehenden Basis verbunden ist,
- eine um die Führungshülse angeordnete und entlang eines Teilstücks der Führungshülse koaxial zur Bewegungsachse verschiebbare Gleithülse,
- einen in der Führungshülse koaxial zur Bewegungsachse verschiebbar angeordneten und mit der Gleithülse starr verbundenen Kolben mit einem Permanentmagneten an dem der Basis zugewandten Ende des Kolbens und mit einer mechanischen Verbindung des Kolbens mit den Koppelgliedern an dem anderen Ende des Kolbens, wobei der Kolben einer Halteposition zustellbar ist, in welcher der Kolben durch eine aus magnetischen Wechselwirkungen des Permanentmagneten mit dem magnetischen Material der Basis resultierende erste Magnetkraft gehalten ist und die Greiffinger durch die Koppelglieder zugestellt sind, und
- eine der Basis zugeordnete elektrische Spule, bei deren Bestromung eine zweite Magnetkraft erzeugbar ist, die der ersten Magnetkraft entgegengerichtet ist, sodass dann die erste Magnetkraft durch die zweite Magnetkraft aufgehoben ist.

Unter einer im Wesentlichen senkrecht zur Bewegungsachse gerichteten Zustellrichtung wird eine Richtung verstanden, die um bis zu 30° von einer orthogonal zur Bewegungsachse verlaufenden Geraden abweicht. Durch die Zustellung der Greiffinger in Zustellrichtung sind die Greiffinger um eine Zustellstrecke bewegt, die als senkrechter Abstand eines jeweils betrachteten Punkts des Greiffingers zur Bewegungsachse beschrieben werden kann. Eine Zustellung in Zustellrichtung kann beispielsweise linear oder auf einer Kreisbahn erfolgen.

Um ein Ergreifen und Absetzen von Objekten entlang der Bewegungsachse zu ermöglichen, ist die erfindungsgemäße Greifvorrichtung vorzugsweise in Richtung der Bewegungsachse beweglich ausgelegt. Die Greifvorrichtung kann beispielsweise an einer Halterung angeordnet sein, die über einen Verstellantrieb in Richtung der Bewegungsachse verfügt. Eine entsprechende Bewegung kann auch durch ein Hebelsystem, Elektromotoren, Linearmotoren, einen Roboterarm oder manuelle Einwirkungen eines Bedieners ermöglicht sein. Die Bewegung in Richtung der Bewegungsachse kann auch durch einen Anteil einer beispielweise bogenförmigen Bewegung oder einer zusammengesetzten Bewegung, z. B. aus linearen Anteilen und Kreisbahnausschnitten, bewirkt sein. Es kann in weiteren Ausführungsformen der erfindungsgemäßen Greifvorrichtung vorgesehen sein, dass neben einer Bewegung entlang der Bewegungsachse auch Bewegungen entlang weiterer Bewegungsachsen, z. B. entlang von Achsen eines kartesischen Koordinatensystems, ermöglicht sind.

Befindet sich der Kolben in der Halteposition, ist die erfindungsgemäße Greifvorrichtung in einem Greifzustand. Das bedeutet, die Greiffinger sind in Zustellrichtung zugestellt. Bei entsprechender Positionierung der Greiffinger zu einem zu ergreifenden oder abzusetzenden Objekt kann dieses Objekt durch die Greifvorrichtung mittels der Greiffinger ergriffen bzw. gehalten werden.

Befindet sich der Kolben dagegen entfernt von der Halteposition in einer Öffnungsposition, weist die Greifvorrichtung einen Öffnungszustand auf. Die Greiffinger sind dann in Zustellrichtung so zugestellt, dass kein Objekt durch die Greifvorrichtung mittels der Greiffinger ergriffen bzw. gehalten werden kann.

Die Greifvorrichtung befindet sich bei einem in der Halteposition befindlichen Kolben in einem Greifzustand, in dem die Greiffinger durch die Koppelglieder von der Bewegungsachse weg zugestellt sind, sodass ein Objekt durch die zugestellten Greiffinger an einer freien Innenkontur des Objekts ergreifbar ist.

Zu ergreifende und abzusetzende Objekte sind vorzugsweise Gefäße, die beim Betreiben eines Labors, insbesondere eines Labors, in dem biologische, biochemische, genetische und / oder (bio-)physikalische Untersuchungen durchgeführt werden, verwendet werden. Diese Objekte können beispielsweise Kryo-Röhrchen (engl. cryo-vials) sein, wie diese dem Fachmann allgemein bekannt sind und von einer Vielzahl von Anbietern vertrieben werden (z. B. Carl Roth GmbH; neoLab Migge Laborbedarf-Vertriebs GmbH; ratiolab GmbH). Diese Kryo-Röhrchen fassen üblicherweise bis 5 ml und sind mit einem Deckel versehen. Der Deckel weist auf seiner Oberseite eine Vertiefung auf, die von einem erhöhten Rand des Deckels umfangen ist. Durch die Innenseite des Randes ist eine freie Innenkontur des Deckels umgrenzt. Diese Kryo-Röhrchen werden üblicherweise in Behältern in vorgefertigten Steckplätzen (racks) aufbewahrt. Um die Kryo-Röhrchen mit möglichst wenig Platzbedarf unterbringen zu können, sind diese in den racks mit geringen Abständen zueinander gesteckt. Daher ist es günstig, wenn ein Objekt durch eine Greifvorrichtung an dem Deckel, vorzugsweise in der Vertiefung oder an einer Innenseite des Rands, ergriffen werden kann.

Grundsätzlich können aber alle Gegenstände zu ergreifende oder abzusetzende Objekte sein, die eine freie Innenkontur aufweisen. Eine freie Innenkontur ist beispielsweise durch die Innenseite einer Öffnung eines Kryo-Röhrchens (Innenwand des Kryo-Röhrchens) ohne Deckel gegeben. Eine freie Innenkontur kann auch durch eine Vertiefung in der Oberfläche des Objektes gegeben sein. Die freie Innenkontur kann einen rotationssymmetrischen, einen spiegelsymmetrischen, einen asymmetrischen oder einen anders gestalteten Querschnitt aufweisen.

In einer Fortbildung der erfindungsgemäßen Greifvorrichtung (nachfolgend auch kurz: Vorrichtung) ist zwischen der Basis und der der Basis zugewandten Stirnseite der Gleithülse eine erste Rückstellfeder angeordnet, durch welche die Gleithülse eine erste Rückstellstrecke weit von der Basis weggeschoben wird, wenn die erste Magnetkraft durch die zweite Magnetkraft aufgehoben ist.

Eine Rückstellung kann auch allein durch Wirkung der Schwerkraft auf die rückzustellenden Elemente, z. B. Gleithülse und Kolben, erfolgen, ohne dass eine erste Rückstellfeder vorhanden oder erforderlich ist. Eine Rückstellung kann ferner durch eine Kraft eines im Greifzustand elastisch verformten Elementes der erfindungsgemäßen Greifvorrichtung erfolgen. Beispielsweise kann eine solche Kraft durch im Greifzustand elastisch verformte Bereiche der Greiffinger bewirkt sein.

Durch eine erste Rückstellfeder ist vorteilhaft erreicht, dass die Gleithülse, und mit dieser auch der Kolben, aus der Halteposition geschoben wird und nicht in dieser verharrt. Vorzugsweise wird die Gleithülse durch Wirkung der Rückstellfeder in eine bestimmte Position, beispielsweise in die Öffnungsposition (Öffnungszustand der Greifvorrichtung), rückgestellt. Außerdem ist durch die Rückstellfeder vorteilhaft bewirkt, dass ungewollte Vibrationen und sonstige Bewegungen der Gleithülse (Verschiebungen in Richtung der Bewegungsachse) weitestgehend verhindert werden.

Es ist ferner günstig, wenn mindestens durch einen Anteil des magnetischen Materials ein Spulenkern gebildet ist, um den die Spule angeordnet ist. Durch eine solche Anordnung ist die Erzeugung der zweiten Magnetkraft unterstützt und es ist eine kurze Wirkungsweite der ersten und zweiten Magnetkräfte ausreichend, wodurch ein effizienterer Betrieb der erfindungsgemäßen Greifvorrichtung ermöglicht ist.

Ist der Spulenkern in weiteren Ausführungen der erfindungsgemäßen Greifvorrichtung entlang der Bewegungsachse beweglich gelagert, ist in günstiger Weise eine mögliche Beschädigung der Greifvorrichtung durch ein zu starkes Zustellen der Greifvorrichtung in Richtung der Bewegungsachse vermieden (Überdrückungsschutz).

Es ist außerdem möglich, dass der Spulenkern mit weiteren Bauelementen kombiniert ist. So kann in einer vorteilhaften Ausführung der Vorrichtung der Spulenkern mit einer Antriebswelle in Verbindung stehen, z. B. an dieser befestigt oder an dieser angeformt sein. Der Spulenkern kann vorteilhaft gegenüber der Antriebswelle um eine bestimmte Strecke verstellbar sein. Beispielsweise können der Spulenkern und die Antriebswelle durch eine Stift-Langloch-Verbindung, eine Nut-Feder-Verbindung oder eine vergleichbare verdrehgesicherte und entlang der Bewegungsachse linear verschiebbare Anordnung verbunden sein.

Die Greifeinheit kann beispielsweise als eine sogenannte Greiffingeranlenkung, bestehend aus den Koppelgliedern, den Greiffingern und einem Übertragungselement, ausgebildet sein. Um eine Kraft auf die Greiffinger zu übertragen, sind die Koppelglieder vorhanden, die bei einer entsprechenden Stellung auf die Greiffinger einwirken, beispielsweise gegen diese gedrückt werden. Durch das Aufbringen einer Druckkraft kann jeder der Greiffinger beispielsweise verschoben, gekippt, gebogen oder tordiert werden. Ein derart mit einer Kraft beaufschlagter Greiffinger oder Abschnitte des Greiffingers sind vorzugsweise in eine Position bewegt, in der jeder der Greiffinger gegen einen Abschnitt der freien Innenkontur des zu ergreifenden Objekts gedrückt ist und eine Haltekraft von der Greifvorrichtung über die Greifeinheit auf das Objekt geleitet ist.

Um eine Zentrierung des Objektes zur Greifeinheit, vorzugsweise zur Bewegungsachse, zu unterstützen, kann ein Adapter vorhanden sein, der vorzugsweise an die freie Innenkontur angepasst ist. Der Adapter kann in weiteren Ausgestaltungen auch an die freie Innenkontur aktiv oder passiv anpassbar sein. Vorzugsweise ist der Adapter an der Gleithülse angeordnet, beispielsweise an dieser befestigt oder an dieser angeformt.

Die Greifeinheit kann durch ein starr mit der Führungshülse verbundenes Betätigungselement, beispielsweise durch einen Druckstab, betätigt sein.

Dabei kann zwischen dem Betätigungselement und der Greifeinheit ein in Richtung der Bewegungsachse (fortan auch: axial) verschiebbar angeordnetes Übertragungselement, beispielsweise in Form eines axial verschiebbaren Hohlzylinders (nachfolgend auch als Halbschale bezeichnet), angeordnet sein. Das Übertragungselement kann der Aufnahme und Ableitung überhöhter Druckkräfte und zu großer Zustellwege dienen (Überdrückungsschutz).

Es ist zudem vorteilhaft möglich, dass durch die axial bewegliche Anordnung des Übertragungselementes ein Ausgleich zwischen verschieden großen Relativbewegungen von Elementen der Greifvorrichtung erlaubt ist. Beispielsweise ist zwischen dem Permanentmagneten und dem Spulenkern in der Öffnungsposition ein Mindestabstand von einigen Millimetern (z. B. 5 mm) erforderlich, um ein unbeabsichtigtes Anheften des Permanentmagneten an den Spulenkern (Halteposition) zu verhindern. Dagegen sind die erforderlichen Zustellstrecken der Koppelglieder und der Greiffinger weitaus geringer (z. B. 0,5 bis 1 mm). Die genannte Konstruktion erlaubt vorteilhaft den axialen Hub des Kolbens hinreichend groß zu gestalten und zugleich geringere Zustellstrecken der Koppelglieder und Greiffinger zu realisieren.

Die gesamte bisher beschriebene erfindungsgemäße Greifvorrichtung kann über die durch den Spulenkern oder durch ein separates Element gebildete Antriebswelle axial gelagert sein. Ein Antrieb der Antriebswelle, vorzugsweise mittels eines Elektromotors, kann dabei über ein geeignetes Antriebselement, beispielsweise über ein Kegelrad, erfolgen.

Der Antrieb ist vorzugsweise der Basis zugeordnet. Mittels des Antriebs ist die Greifvorrichtung um die Bewegungsachse drehbar.

Um die Greifvorrichtung auch praktisch einsetzen zu können, ist diese vorzugsweise über eine Halteeinrichtung mit einem entlang der Bewegungsachse wirkenden weiteren Antrieb verbunden und entlang der Bewegungsachse gesteuert oder geregelt (z. B. als Servoantrieb) verfahrbar. Der Halteeinrichtung können in weiteren Ausführungen zusätzliche Antriebe zugeordnet sein, durch welche die Halteeinrichtung mit der Greifvorrichtung, vorzugsweise geregelt, entlang verschiedener Raumkoordinaten verfahrbar ist. Solche Raumkoordinaten können beispielsweise Koordinaten eines kartesischen Koordinatensystems, eines Polarkoordinatensystems oder Kombinationen daraus sein.

Eine vorteilhafte Verwendung der erfindungsgemäßen Vorrichtung liegt auf dem technischen Gebiet der Lagerung, Sortierung und Bereitstellung von Proben, auch in tiefkalten Umgebungen. Unter tiefkalt werden Temperaturen unter -50°C, vorzugsweise aber von -120°C und kälter verstanden.

Die Erfindung wird nachfolgend anhand von Ausführungsbeispielen und Abbildungen näher beschrieben. Dabei zeigen:
- Fig. 1: ein erstes Ausführungsbeispiel einer erfindungsgemäßen Greifvorrichtung mit einer einteiligen Spulenkern-Antriebswellen-Gestaltung im geöffneten Zustand mit einer Rückstellfeder,
- Fig. 2: eine Schnittdarstellung der Greifeinheit des ersten Ausführungsbeispiels mit drei radial angeordneten Greiffingern,
- Fig. 3: das erste Ausführungsbeispiel der erfindungsgemäßen Greifvorrichtung im Greifzustand,
- Fig. 4: ein zweites Ausführungsbeispiel einer erfindungsgemäßen Greifvorrichtung mit einer einteiligen Spulenkern-Antriebswellen-Gestaltung im Öffnungszustand ohne Rückstellfeder,
- Fig. 5: ein drittes Ausführungsbeispiel einer erfindungsgemäßen Greifvorrichtung mit einer zweiteiligen Spulenkern-Antriebswellen-Gestaltung und
- Fig. 6: ein verallgemeinertes Ausführungsbeispiel einer mehrachsigen Zustellungsvorrichtung der erfindungsgemäßen Greifvorrichtung.

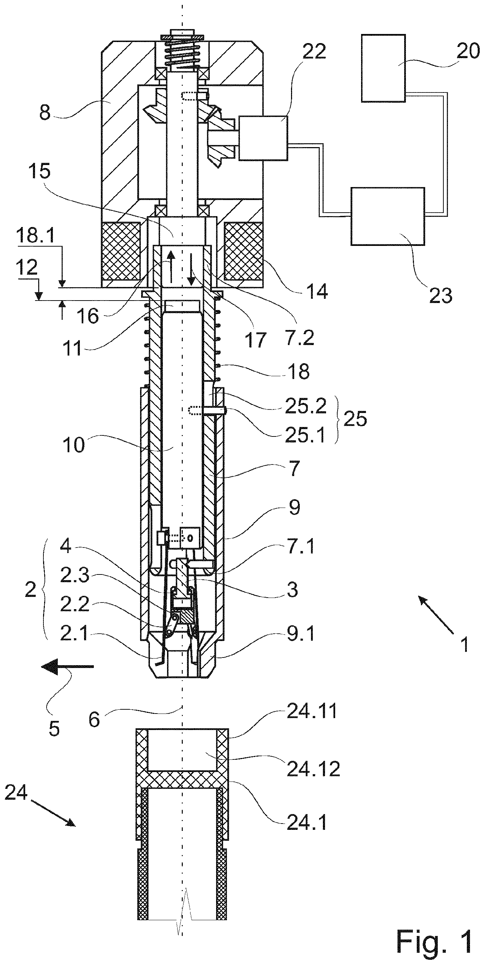

Als wesentliche Elemente eines ersten Ausführungsbeispiels einer erfindungsgemäßen Greifvorrichtung 1 sind in Fig. 1 entlang einer Bewegungsachse 6 eine Basis 8 mit einem langgestreckten Spulenkern 15 und einer den Spulenkern 15 über einen Längsabschnitt umgreifenden elektrischen Spule 14, einem Permanentmagneten 11, einem Kolben 10, einer Führungshülse 7, einer um die Führungshülse 7 verschiebbar angeordneten und mit dem Kolben 10 starr verbundenen Gleithülse 9 und eine Greifeinheit 2 vorhanden.

Alle vorgenannten Elemente sind in dem ersten Ausführungsbeispiel symmetrisch, zumeist sogar rotationssymmetrisch um die Bewegungsachse 6 angeordnet.

Die Führungshülse 7 weist ein erstes Ende 7.1 und ein zweites Ende 7.2 auf. An dem ersten Ende 7.1 ist ein Betätigungselement 3 in Form eines Druckstabes angeordnet. An dem zweiten Ende 7.2 ist die Führungshülse 7 fest mit dem Spulenkern 15 verbunden. In weiteren Ausführungen der erfindungsgemäßen Vorrichtung kann die Führungshülse 7 auch fest mit der Basis 8 verbunden sein. Dann ist eine rotierende Bewegung der Greifvorrichtung 1 um die Bewegungsachse 6 nur möglich, wenn die Basis 8 als Ganzes um die Bewegungsachse 6 gedreht ist.

Die Gleithülse 9 ist entlang eines Teilstücks der Führungshülse 7 koaxial zur Bewegungsachse 6 verschiebbar. Die Gleithülse 9 ist dabei durch eine erste Rückstellfeder 18 gegen einen auf der äußeren Oberfläche der Führungshülse 7 umlaufenden Ring abgestützt. Die erste Rückstellfeder 18 ist um die Führungshülse 7 angeordnet und umfängt diese entlang eines der Basis 8 zugewandten Abschnitts.

Die Gleithülse 9 ragt über das erste Ende 7.1 hinaus und endet in einem rotationssymmetrisch zur Bewegungsachse 6 geformten Boden der Gleithülse 9, der als Adapter 9.1 dient. Der Adapter 9.1 ist an seiner Außenseite als ein sich zum Ende der Gleithülse 9 hin verjüngender Konus ausgebildet. Der Adapter 9.1 dient einem Zentrieren eines zu ergreifenden Objekts 24 zur Greifeinheit 2 und ist an eine freie Innenkontur des zu ergreifenden Objekts 24 angepasst.

Als Objekt 24 ist beispielhaft lediglich ein einziges Kryo-Röhrchen in einer verallgemeinerten Darstellung gezeigt. Das Objekt 24 weist einen Deckel 24.1 auf, der auf seiner Oberseite einen hohen umlaufenden Rand 24.11 besitzt, durch den eine nach oben offene Vertiefung 24.12 auf der Oberseite des Deckels 24.1 umfangen ist. Die Vertiefung 24.12 ist unten von einem Boden (nicht gezeigt) begrenzt. Durch die Innenseite des umlaufenden Randes 24.11 ist eine freie Innenkontur gegeben und begrenzt.

Der Adapter 9.1 ist dem Deckel 24.1 in Richtung auf die Vertiefung 24.12 zu, hier: von oben, zustellbar. Die Zustellung geschieht entlang der Bewegungsachse 6, wobei der Adapter 9.1 in die Vertiefung 24.12 eingeführt wird. Dabei wird die Vertiefung 24.12, und damit das Objekt 24, durch den Adapter 9.1 zur Bewegungsachse 6 zwangszentriert. Die Zustellung des Adapters 9.1 endet spätestens dann, wenn eine freie Stirnseite des Adapters 9.1 auf dem Boden der Vertiefung 24.12 auftrifft.

In der Führungshülse 7 ist der Kolben 10 angeordnet. Dieser trägt an einem zu dem zweiten Ende 7.2 der Führungshülse 7 gerichteten Ende den Permanentmagneten 11, der an dem Kolben 10 befestigt, beispielsweise angeschraubt und / oder angeklebt, ist. An seinem anderen Ende trägt der Kolben 10 die Greifeinheit 2, die über Greiffinger 2.1 mit dem Kolben 10 verbunden ist. Zwischen dem Permanentmagneten 11 und der Basis 8 kann eine erste Magnetkraft 16 wirken (als nach oben gerichteter Pfeil symbolisiert).

Der Kolben 10 ist über eine erste Stiftverbindung 25 starr mit der Gleithülse 9 verbunden. Die Stiftverbindung 25 ist durch einen ersten Stift 25.1, der durch ein in der Führungshülse 7 vorhandenes erstes Langloch 25.2 in eine Bohrung (nur angedeutet gezeigt) in dem Kolben 10 gesteckt ist, gebildet. Der Kolben 10 und die Gleithülse 9 bewegen sich also immer parallel, gleichsinnig und über eine gleiche Streckenlänge.

Die Greifeinheit 2 ist durch die Greiffinger 2.1, Koppelglieder 2.2 und eine Gelenkanbindung 2.3 gebildet. Als Greiffinger 2.1 sind in dem ersten Ausführungsbeispiel der erfindungsgemäßen Vorrichtung Stäbe aus Federstahl vorhanden, die an einem aus der Greifeinheit 2 heraus ragenden freien Ende einen von der Bewegungsachse 6 weg gerichteten (auswärts gerichteten) Haken 2.11 aufweisen. Das andere Ende jedes Greiffingers 2.1 ist starr an dem Kolben 10 verankert. Jeder Greiffinger 2.1 weist ein Kipplager (nur angedeutet gezeigt) auf, über das er mit je einem Koppelglied 2.2 drehbar verbunden ist. Durch die Lagerung der Greiffinger 2.1 an Kolben 10 und Koppelglied 2.2 sind die Greiffinger 2.1 relativ zu diesen Elementen in axialer Richtung starr.

Die Basis 8 ist durch ein Gehäuse (angedeutet gezeigt) gebildet, in dem die elektrische Spule 14, der Spulenkern 15, ein Antrieb 20 und ein Drehantrieb 22 untergebracht sind. Der Spulenkern 15 besteht aus einem magnetischen Material. Er durchzieht die Basis 8 entlang der Bewegungsachse 6 und ist um diese drehbar gelagert. In einem dem zweiten Ende 7.2 der Führungshülse 7 zugewandten Bereich der Basis 8 ist der Spulenkern 15 von der elektrischen Spule 14 umfangen. An einem dazu entgegensetzten Bereich der Basis 8 ist der Drehantrieb 22 mit einem auf dem Spulenkern 15 befestigten Kegelrad vorhanden. Neben dem Drehantrieb 22 zur Drehung der Greifvorrichtung 1 um die Bewegungsachse 6 dient der Antrieb 20, der mit einer Steuerungseinheit 23 datentechnisch in Verbindung steht, einer Bewegung der Greifvorrichtung 1 entlang der Bewegungsachse 6. Durch die elektrische Spule 14 ist ein Magnetfeld und eine daraus resultierende zweite Magnetkraft 17 (als nach unten gerichteter Pfeil symbolisiert) bewirkbar, die der ersten Magnetkraft 16 entgegengerichtet ist.

In einer weiteren Ausgestaltung der Erfindung kann der Antrieb 20 auch zugleich als Drehantrieb 22 ausgelegt sein.

Der Spulenkern 15 ist in der Basis 8 axial gelagert. Er trägt außerdem die Führungshülse 7, die Greifeinheit 2, die Gleithülse 9 und den Kolben 10.

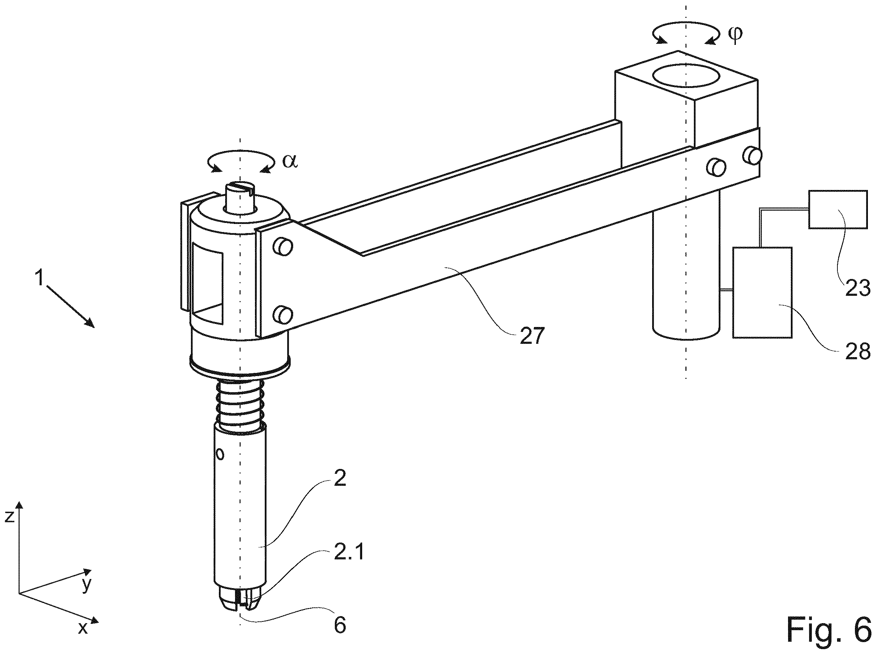

Die Greifvorrichtung 1 steht signaltechnisch mit der Steuerungseinheit 23 in Verbindung, durch welche der Antrieb 20, der Drehantrieb 22 und die Zustellung der Greifvorrichtung 1 (letztere siehe Fig. 6, Zustelleinheit 28) steuerbar sind.

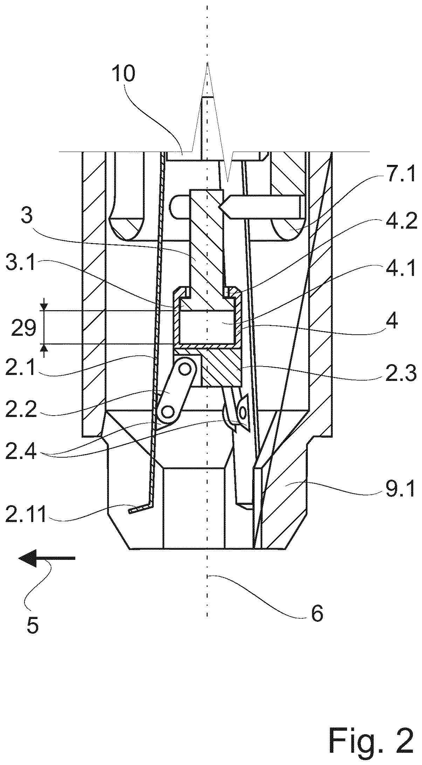

Die Greifeinheit 2 ist in Fig. 2 als ein vergrößerter Ausschnitt (siehe Fig. 1) gezeigt. Das Betätigungselement 3 steht mit einem Übertragungselement 4, das als ein Hohlzylinder (Halbschale) ausgebildet ist, in Verbindung.

Die als Hebel ausgestalteten Koppelglieder 2.2 weisen an beiden Enden je ein Lager auf. Mit einem Lager ist jedes Koppelglied 2.2 an der Gelenkanbindung 2.3 drehbar angelenkt. Das jeweils andere Ende jedes Koppelgliedes 2.2 ist jeweils an einem Kipplager angelenkt, das fest mit jeweils einem Greiffinger 2.1 verbunden ist. Durch die Koppelglieder 2.2 können jeweils Druckkräfte auf einen seitlichen Bereich des jeweiligen Greiffingers 2.1 aufgebracht werden. Dieser Bereich schließt an dem freien Ende des Greiffingers 2.1 an.

Das Betätigungselement 3 ist als ein Druckstab ausgebildet, der axial entlang der Bewegungsachse 6 angeordnet und mit dem ersten Ende 7.1 der Führungshülse 7 mittels einer Schraubverbindung fest verbunden ist. Das andere Ende des Betätigungselements 3 weist eine rotationssymmetrische Querschnittsvergrößerung 3.1 auf. Das Übertragungselement 4 ist eine Halbschale, durch die ein Innenraum 4.1 umfangen ist. Das Betätigungselement 3 ist mit seinem die Querschnittsvergrößerung 3.1 tragenden Ende durch eine Öffnung 4.2 in den Innenraum 4.1 eingesteckt, wobei die lichte Weite der Öffnung 4.2 kleiner als der Durchmesser der Querschnittsvergrößerung 3.1 ist. Der lichte Durchmesser des Innenraums 4.1 ist geringfügig größer als der Durchmesser der Querschnittsvergrößerung 3.1, sodass das Betätigungselement 3 in dem Innenraum 4.1 des Übertragungselementes 4 mit Spiel geführt ist.

In axialer Richtung ist der Innenraum 4.1 größer als eine Länge der Querschnittsvergrößerung 3.1. Durch eine Differenz zwischen der Länge der Querschnittsvergrößerung 3.1 und der Länge des Innenraums 4.1 in axialer Richtung ist eine Hubstrecke 29 des Betätigungselements 3 gegeben. Auf der der Öffnung 4.2 gegenüberliegenden Seite ist der Innenraum 4.1 in axialer Richtung durch einen Bodenbereich begrenzt. An den Bodenbereich schließt die Gelenkanbindung 2.3 an.

Durch diese Ausgestaltung von Betätigungselement 3 und Übertragungselement 4 ist es ermöglicht, dass die Querschnittsvergrößerung 3.1 in einem Öffnungszustand der Greifvorrichtung 1 an der Öffnung 4.2 und in einem Greifzustand an dem Bodenbereich anliegt. Bei einem Übergang der Greifvorrichtung 1 von dem Öffnungszustand zum Greifzustand bzw. umgekehrt wird durch das Betätigungselement 3 jeweils die Hubstrecke 29 zurückgelegt.

Der Kolben 10 befindet sich im Greifzustand in einer Halteposition 13 und ist durch die erste Magnetkraft 16 gehalten. Im Öffnungszustand der Greifvorrichtung 1 befindet sich der Kolben 10 in der Öffnungsposition 12.

Alternative Ausgestaltungen des Übertragungselementes 4 sind durch andere Konstruktionen möglich, durch die entsprechende Begrenzungen (Anschläge) der Hubstrecke 29 erzielt werden.

Die Koppelglieder 2.2 stehen von der Basis 8 in Richtung auf die Greifeinheit 2 gesehen unter einem Winkel von der Bewegungsachse 6 ab. Im dargestellten Öffnungszustand der Greifvorrichtung 1 (Fig. 2) schließen die Koppelglieder 2.2 mit der Bewegungsachse 6 einen spitzen Winkel von etwa 45° (sin45 > rund 0,71) ein und sind zum Adapter 9.1 hin gerichtet. Die Greiffinger 2.1 sind nicht gebogen und ragen nicht seitlich über den Adapter 9.1 hinaus. Der Permanentmagnet 11 berührt den Spulenkern 15 nicht.

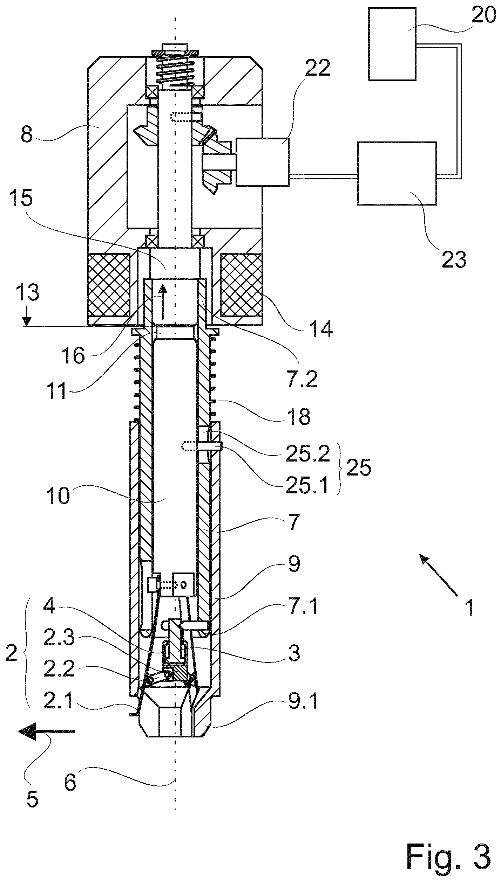

Ein Greifzustand der erfindungsgemäßen Vorrichtung gemäß dem ersten Ausführungsbeispiel ist in Fig. 3 gezeigt. Wie oben ausgeführt, ist das Koppelglied 2.2 eine geringere Strecke auf das Kipplager des jeweiligen Greiffingers 2.1 zugestellt, als wenn der Winkel zunimmt und beispielsweise einen Wert von etwa 90° aufweist. In einer 90°-Stellung ist das Koppelglied 2.2 die größte Strecke auf den Greiffinger 2.1 zugestellt, was durch die Sinusfunktion des Winkels leicht nachvollziehbar beschrieben werden kann (sin90 = 1). Durch Wirkung des so zugestellten Koppelgliedes 2.2 ist der Greiffinger 2.1 um die Befestigung am Kolben 10 gebogen, sodass das freie Ende von der Bewegungsachse 6 weg nach außen bewegt ist. Die so bewirkte Zustellung der Greiffinger 2.1 erfolgt in einer Zustellrichtung 5 (vereinfachend durch einen beispielhaften Pfeil gezeigt), die im Wesentlichen senkrecht zur Bewegungsachse 6 gerichtet ist und eine Kreisbahn mit großem Radius beschreibt.

Im Greifzustand steht der Permanentmagnet 11 mit dem Spulenkern 15 in nahezu direktem Kontakt und ist durch eine zwischen Permanentmagnet 11 und Spulenkern 15 wirkende erste Magnetkraft 16, welche über einen Luftspalt zwischen beiden wirkt, an diesem gehalten. Der Permanentmagnet 11 befindet sich in einer Halteposition 13. In dieser Halteposition 13 ist durch den Permanentmagnet 11 auch der Kolben 10, und mit diesem auch die Gleithülse 9, in Richtung auf das zweite Ende 7.2 der Führungshülse 7 gezogen. Die erste Rückstellfeder 18 ist zusammengedrückt und gespannt. Zugleich sind die Greiffinger 2.1 ebenfalls in Richtung zweites Ende 7.2 bewegt, wodurch das Übertragungselement 4 an seinem Bodenbereich gegen die Stirnseite der Querschnittsvergrößerung 3.1 des Betätigungselements 3 gedrückt wird. Die Gelenkanbindung 2.3 wird axial in Richtung Adapter 9.1 geschoben. Aufgrund der dadurch bewirkten Relativbewegung zwischen Greiffinger 2.1 und Gelenkanbindung 2.3 wird der Winkel zwischen Koppelglied 2.2 und Greiffinger 2.1 größer. Daraus resultiert eine in Zustellrichtung 5 gerichtete Bewegung der freien Enden der Greiffinger 2.1 weg von der Bewegungsachse 6.

Beträgt der Winkel rund 90°, sind die Koppelglieder 2.2 stark gegen die Greiffinger 2.1 gedrückt, wodurch diese nach außen gebogen sind und seitlich über den Adapter 9.1 hinausragen. Ist der Adapter 9.1 einer Vertiefung 24.12 (siehe Fig. 1) zugestellt, d. h. eine Strecke in diese eingeführt, und ist der Betrag, mit dem die freien Enden der Greiffinger 2.1 über den Adapter 9.1 hinausragen, groß genug gewählt, sind die freien Enden von innen gegen den Rand 24.11 gedrückt. Die Greifvorrichtung 1 und das Objekt 24 stehen in kraftschlüssiger Verbindung miteinander. Durch Verfahren der Greifvorrichtung 1 entlang der Bewegungsachse 6 ist der Deckel 24.1 mit dem gesamten Objekt 24 z. B. aufwärts bzw. abwärts zu bewegen.

In weiteren Ausführungen der Greifvorrichtung 1 können die Greiffinger 2.1 auch gegen eine andere freie Innenkontur eines Objekts 24, beispielsweise gegen die Innenseite einer Gefäßwandung, gedrückt sein. Das Objekt 24 muss dann keinen Deckel 24.1 aufweisen.

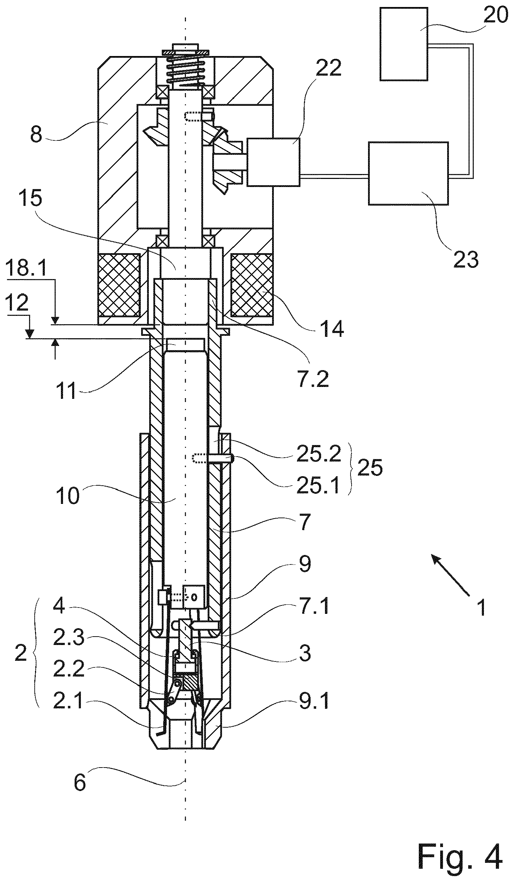

Ein in der Fig. 4 gezeigtes zweites Ausführungsbeispiel der Greifvorrichtung 1 entspricht im Grundsatz dem in den Fig. 1 und 2 gezeigten ersten Ausführungsbeispiel, jedoch ist keine erste Rückstellfeder 18 vorhanden. Eine Rückstellung des Kolbens 10 aus der Halteposition 13 in eine Öffnungsposition 12 erfolgt durch Schwerkraft. Sie kann in einer weiteren Ausführung auch durch eine Kraft erfolgen, die durch elastisch verformte Greiffinger im Greifzustand der Greifvorrichtung bewirkt ist.

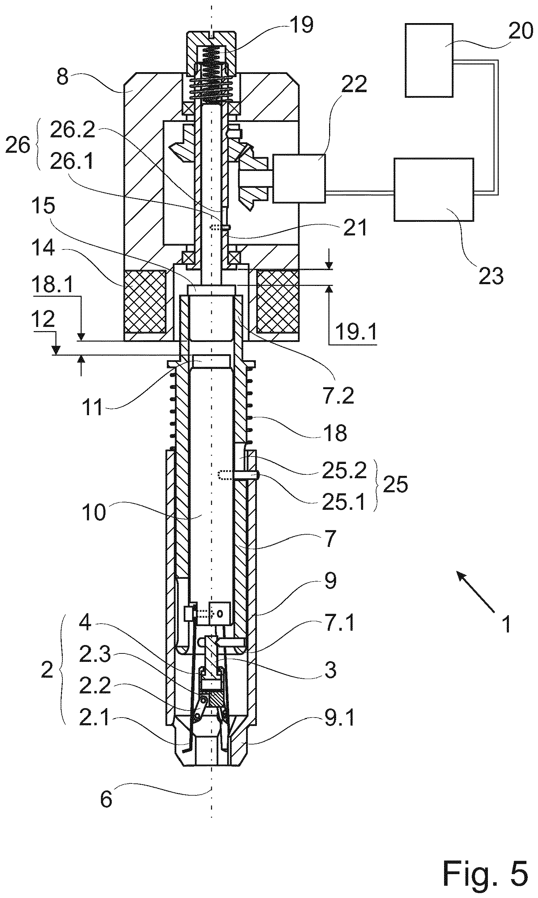

In einem dritten Ausführungsbeispiel der erfindungsgemäßen Greifvorrichtung 1 ist der Spulenkern 15 an seinem aus der elektrischen Spule 14 in die Basis 8 ragendem Abschnitt von einer Antriebswelle 21 umfangen. Die Antriebswelle 21 ist mit dem Spulenkern 15 verdrehsicher verbunden. In der Fig. 5 ist als eine verdrehsichere Verbindung eine zweite Stiftverbindung 26 vorhanden, die durch einen zweiten Stift 26.1 und ein zweites Langloch 26.2 gebildet ist. Das zweite Langloch 26.2 befindet sich in der Antriebswelle 21 und erstreckt sich koaxial zur Bewegungsachse 6. Durch das zweite Langloch 26.2 ist der zweite Stift 26.1 in eine Bohrung des Spulenkerns 15 in den Spulenkern 15 eingesteckt. Der Spulenkern 15 und die Antriebswelle 21 sind in axialer Richtung mit dem Betrag einer zweiten Rückstellstrecke 19.1 voneinander beabstandet angeordnet. Der Spulenkern 15 ist an seinem von der Antriebswelle 21 umfangenen Ende durch eine zweite Rückstellfeder 19 gegen einen Bereich der Basis 8 abgestützt. Die zweite Stiftverbindung 26 ermöglicht es, dass der Spulenkern 15 durch die Antriebswelle 21 vermittels der zweiten Stiftverbindung 26 angetrieben, insbesondere um die Bewegungsachse 6 rotiert werden kann.

Im Falle einer übermäßigen Zustellung der Greifvorrichtung 1 zu einem Objekt 24 oder auf einen anderen mechanischen Widerstand ist die Führungshülse 7 mit allen daran befindlichen Elementen (siehe oben) in Richtung der Basis 8 geschoben. Aufgrund der festen Verbindung mit der Führungshülse 7 ist auch der Spulenkern 15 in Richtung auf die Antriebswelle 21 verschoben. Da die Antriebswelle 21 fest in der Basis 8 gelagert ist, wird der Spulenkern 15 gegen die zweite Rückstellfeder 19 geschoben und diese wird zusammengedrückt und die zweite Rückstellstrecke 19.1 verkleinert. Durch diese Ausgestaltung der Greifvorrichtung 1 ist ein Überdrückungsschutz erreicht, durch den die Greifvorrichtung 1 bei einem versehentlich zu starken Zustellen auf ein Objekt 24 oder auf einen anderen Widerstand vor ernsthaften Beschädigungen geschützt ist.

Es ist möglich, dass ein Sensor, ein Schalter oder ein Taster (alle nicht gezeigt) vorhanden sind, aufgrund deren Signalausgabe bei Verkleinerung der zweiten Rückstellstrecke 19.1 unter einen bestimmten Schwellwert eine Zustellung der Greifvorrichtung 1 unterbrochen wird. Zusätzlich kann ein Fehlersignal generiert und an die Steuerungseinheit 23 übermittelt werden. Wird die Zustellbewegung aufgehoben und rückgängig gemacht, wird der Spulenkern 15 durch Wirkung der zweiten Rückstellfeder 19 wieder rückgestellt.

In der Fig. 6 ist vereinfacht eine Ausführung eines Zustellsystems zur Zustellung der erfindungsgemäßen Greifvorrichtung 1 zu einer bestimmten Position gezeigt. Die Greifvorrichtung 1 ist an einem Ende einer Traverse 27 befestigt und durch einen Drehantrieb 22 (nicht gezeigt) um einen Drehwinkel α (alpha) um die Bewegungsachse 6 drehbar. Das andere Ende der Traverse 27 ist an einer Zustelleinheit 28 befestigt, durch die die Traverse 27 mit der Greifvorrichtung 1 in Richtung jeder der Achsen eines kartesischen Koordinatensystems gesteuert zustellbar ist. Die Zustelleinheit 28 steht mit der Steuerungseinheit 23 in Verbindung. Zudem ist die Traverse 27 an dem anderen Ende gesteuert um eine in Richtung der z-Achse des kartesischen Koordinatensystems verlaufende Achse um einen Drehwinkel ϕ (phi) drehbar. Die Bewegungsachse 6 verläuft koaxial zur z-Achse.

In weiteren Ausführungen kann ein Polarkoordinatensystem oder eine Kombination von kartesischem Koordinatensystem und Polarkoordinatensystem verwendet sein.

Es ist in weiteren Ausgestaltungen möglich, dass durch die Zustelleinheit 28 weniger Bewegungsmöglichkeiten realisierbar sind. So können in einer Ausgestaltung nur Bewegungen in Richtung der z-Achse und um die Drehwinkel α und ϕ ermöglicht sein. Die Zustelleinheit 28 kann auch so ausgebildet sein, dass weitere Rotationen der Greifvorrichtung 1, beispielsweise um die x-Achse und / oder um die y-Achse und / oder Zustellbewegungen entlang der x-Achse und / oder der y-Achse ermöglicht sind.

Die Zustelleinheit 28 verfügt über eine Positionserkennung, bei der durch Erfassung aller momentan anliegenden Drehwinkel und Positionen der Greifvorrichtung 1 entlang der Achsen des kartesischen Koordinatensystems eine zu jedem Zeitpunkt eindeutige Positionierung der Greifvorrichtung 1 ermöglicht ist.

In einer günstigen Ausgestaltung wird statt der Greifvorrichtung 1 die Positionierung des Adapters 9.1 als Bezug verwendet, da auf diese Weise auch die im Zuge eines Überdrückungsschutzes stattfindenden Bewegungen der Gleithülse 9 und / oder der Führungshülse 7 berücksichtigt werden und eine höhere Präzision der Positionserkennung erreicht ist.

Das Ergreifen, Transportieren und Absetzen eines Objektes 24 soll anhand des ersten Ausführungsbeispiels und der Fig. 1 und 2 detaillierter erläutert werden. Das Objekt 24 befindet sich an einer bekannten Position und ist mit der Vertiefung 24.12 nach oben ausgerichtet. Die Greifvorrichtung 1 wird dem Objekt 24 so zugestellt, dass die Bewegungsachse 6 und eine Längsachse des Objekts 24 gänzlich oder nahezu zusammenfallen. Dies gilt insbesondere dann, wenn die Greifvorrichtung 1 bereits auf wenige (5 bis 10) Zentimeter dem Objekt 24 zugestellt ist. Die Greifvorrichtung 1 wird dem Objekt 24 soweit zugestellt, dass der Adapter 9.1 beginnt in die Vertiefung 24.12 einzugreifen. Die Greifeinheit 2 befindet sich nicht im Greifzustand, die Greiffinger 2.1 ragen nicht seitlich über den Adapter 9.1 hinaus. Die konische Außenform des Adapters 9.1 bedingt eine Zwangszentrierung des Objekts 24 zum Adapter 9.1, sodass nun die Längsachse und die Bewegungsachse 6 vereinfachend beschrieben zusammenfallen. Die Zustellung erfolgt, bis der Adapter 9.1 den oberen Rand 24.11 des Objektes 24 erreicht und wird soweit in Richtung der Bewegungsachse 6 fortgesetzt, bis zusätzlich eine Strecke zugestellt ist, die einer ersten Rückstellstrecke 18.1 entspricht. Dadurch ist der Kolben 10 mit dem Permanentmagneten 11 auf den Spulenkern 15 zu bewegt. Der Permanentmagnet 11 steht mit dem Spulenkern 15 in nahezu direktem Kontakt und wird an diesem durch die erste Magnetkraft 16 in der Halteposition 13 des Kolbens 10 gehalten. Mit dem Kolben 10 sind zugleich die Kippgelenke und die Gleithülse 9 angehoben und die erste Rückstellfeder 18 zusammengedrückt worden. Das Betätigungselement 3 ist gegen die Gelenkanbindung 2.3 gedrückt und die Koppelglieder 2.2 sind relativ zum Betätigungselement 3 in Zustellrichtung 5 bewegt. Der Winkel der Koppelglieder 2.2 wird vergrößert und erreicht etwa 90°. Die Koppelglieder 2.2 sind gegen die Greiffinger 2.1 gedrückt, wodurch deren am Kolben 10 befestigte Enden elastisch verformt sind und deren freie Enden seitlich aus dem Adapter 9.1 ragen. Die freien Enden sind gegen den Rand 24.11 gedrückt. Da die drei Greiffinger 2.1 um jeweils 120° zueinander versetzt seitlich aus dem Adapter 9.1 ragen und gegen den Rand 24.11 gedrückt sind, ist das Objekt 24 zusätzlich zum Adapter 9.1 zentriert und die Kraftwirkung der Greiffinger 2.1 ist gleichmäßig auf den Rand 24.11 geleitet. Das Objekt 24 ist durch die Greifvorrichtung 1 ergriffen.

Durch Verfahren der Greifvorrichtung 1 nach oben, entgegen der bisher beschriebenen Richtung der Zustellung der Greifvorrichtung 1, wird das Objekt 24 angehoben und transportiert. Es kann nun an eine beliebige Position verbracht werden. Dabei wird der Greifzustand durch Wirkung der ersten Magnetkraft 16 aufrecht erhalten.

Hier wird angenommen, dass das Objekt 24 wieder auf die Position zurückgesetzt wird, an der es ergriffen wurde. Dazu wird die Greifvorrichtung 1 wieder der Position zugestellt. Befindet sich das Objekt 24 in einem Abstand mindestens so groß wie die erste Rückstellstrecke 18.1 über der gewünschten Position, wird durch die Steuerungseinheit 23 ein Stromimpuls an die elektrische Spule 14 initiiert. Durch den Stromfluss wird in der elektrischen Spule 14 ein Magnetfeld und die resultierende zweite Magnetkraft 17 bewirkt, die der ersten Magnetkraft 16 entgegengerichtet ist. Durch die zweite Magnetkraft 17 wird die erste Magnetkraft 16 aufgehoben. Mittels der ersten Rückstellfeder 18 werden Gleithülse 9 und Kolben 10 über die erste Rückstellstrecke 18.1 in Richtung des ersten Endes 7.1 zurückgeschoben. Der Kolben 10 befindet sich nicht mehr in der Halteposition 13. Das Betätigungselement 3 wird von dem Bodenbereich des Übertragungselementes 4 abgehoben und die Gelenkanbindung 2.3 entlastet. Infolgedessen ist das Koppelglied 2.2 nicht länger auf den bzw. die Greiffinger 2.1 gedrückt. Der bis dato nahezu rechte Winkel der Koppelglieder 2.2 zur Bewegungsachse 6 nimmt ab und wird wieder zu einem spitzen Winkel. Infolgedessen werden auch Koppelglieder 2.2 nicht mehr gegen die Greiffinger 2.1 gedrückt und die freien Enden der Greiffinger 2.1 ragen nicht mehr seitlich aus dem Adapter 9.1 hervor. Das Objekt 24 ist von der Greifeinheit 2 befreit und wird abgesetzt.

### Bezugszeichenliste

- 1: Greifvorrichtung
- 2: Greifeinheit
- 2.1: Greiffinger
- 2.11: Haken
- 2.2: Koppelglieder
- 2.3: Gelenkanbindung
- 3: Betätigungselement
- 3.1: Querschnittsvergrößerung
- 4: Übertragungselement
- 4.1: Innenraum
- 4.2: Öffnung
- 5: Zustellrichtung
- 6: Bewegungsachse
- 7: Führungshülse
- 7.1: erstes Ende (der Führungshülse 7)
- 7.2: zweites Ende (der Führungshülse 7)
- 8: Basis
- 9: Gleithülse
- 9.1: Adapter
- 10: Kolben
- 11: Permanentmagnet
- 12: Öffnungsposition
- 13: Halteposition
- 14: elektrische Spule
- 15: Spulenkern
- 16: erste Magnetkraft
- 17: zweite Magnetkraft
- 18: erste Rückstellfeder
- 18.1: erste Rückstellstrecke
- 19: zweite Rückstellfeder
- 19.1: zweite Rückstellstrecke
- 20: Antrieb
- 21: Antriebswelle
- 22: Drehantrieb
- 23: Steuerungseinheit
- 24: Objekt
- 24.1: Deckel
- 24.11: Rand
- 24.12: Vertiefung
- 25: erste Stiftverbindung
- 25.1: erster Stift (der ersten Stiftverbindung 25)
- 25.2: erstes Langloch (der ersten Stiftverbindung 25)
- 26: zweite Stiftverbindung
- 26.1: zweiter Stift (der zweiten Stiftverbindung 26)
- 26.2: zweites Langloch (der zweiten Stiftverbindung 26)
- 27: Traverse
- 28: Zustelleinheit
- 29: Hubstrecke
- α: alpha, Drehwinkel der Greifvorrichtung 1
- ϕ: phi, Drehwinkel der Traverse 27

## Patentansprüche

1. Greifvorrichtung (1) zum Ergreifen und Absetzen von Objekten (24) entlang mindestens einer Bewegungsachse (6), aufweisend:
- eine Greifeinheit (2) mit mindestens zwei Greiffingern (2.1) und Koppelgliedern (2.2) zur Zustellung der Greiffinger (2.1) in einer Zustellrichtung (5) im Wesentlichen senkrecht zur Bewegungsachse (6),
- eine koaxial zur Bewegungsachse (6) gerichtete Führungshülse (7), an deren erstem Ende (7.1) die Greifeinheit (2) angeordnet ist und deren zweites Ende (7.2) mit einer wenigstens teilweise aus einem magnetischen Material bestehenden Basis (8) verbunden ist,
- eine um die Führungshülse (7) angeordnete und entlang eines Teilstücks der Führungshülse (7) koaxial zur Bewegungsachse (6) verschiebbare Gleithülse (9),
- einen in der Führungshülse (7) koaxial zur Bewegungsachse (6) verschiebbar angeordneten und mit der Gleithülse (9) starr verbundenen Kolben (10) mit einem Permanentmagneten (11) an dem der Basis (8) zugewandten Ende des Kolbens (10) und mit einer mechanischen Verbindung des Kolbens (10) mit den Koppelgliedern (2.2) an dem anderen Ende des Kolbens (10), wobei der Kolben (10) einer Halteposition (13) zustellbar ist, in welcher der Kolben (10) durch eine aus magnetischen Wechselwirkungen des Permanentmagneten (11) mit dem magnetischen Material der Basis (8) resultierende erste Magnetkraft (16) gehalten ist und die Greiffinger (2.1) durch die Koppelglieder (2.2) zugestellt sind und
- eine der Basis (8) zugeordnete elektrische Spule (14), bei deren Bestromung eine zweite Magnetkraft (17) erzeugbar ist, die der ersten Magnetkraft (16) entgegengerichtet ist, sodass dann die erste Magnetkraft (16) durch die zweite Magnetkraft (17) aufgehoben ist.

2. Greifvorrichtung nach Anspruch 1, **dadurch gekennzeichnet, dass** sich die Greifvorrichtung (1) bei einem in der Halteposition (13) befindlichen Kolben (10) in einem Greifzustand befindet, in dem die Greiffinger (2.1) durch die Koppelglieder (2.2) von der Bewegungsachse (6) weg zugestellt sind, sodass ein Objekt (24) durch die zugestellten Greiffinger (2.1) an einer freien Innenkontur des Objekts (24) ergreifbar ist.

3. Greifvorrichtung nach Anspruch 2, **dadurch gekennzeichnet, dass** zwischen der Basis (8) und einer der Basis (8) zugewandten Stirnseite der Gleithülse (9) eine erste Rückstellfeder (18) angeordnet ist, durch welche die Gleithülse (9) eine erste Rückstellstrecke (18.1) weit von der Basis (8) weggeschoben wird, wenn die erste Magnetkraft (16) durch die zweite Magnetkraft (17) aufgehoben ist.

4. Greifvorrichtung nach Anspruch 2 oder 3, **dadurch gekennzeichnet, dass** mindestens durch einen Anteil des magnetischen Materials der Basis (8) ein Spulenkern (15) gebildet ist, um den die elektrische Spule (14) angeordnet ist.

5. Greifvorrichtung nach Anspruch 4, **dadurch gekennzeichnet, dass** der Spulenkern (15) entlang der Bewegungsachse (6) beweglich gelagert ist.

6. Greifvorrichtung nach Anspruch 5, **dadurch gekennzeichnet, dass** die Greifeinheit (2) durch ein starr mit der Führungshülse (7) verbundenes Betätigungselement (3) betätigt ist.

7. Greifvorrichtung nach Anspruch 6, **dadurch gekennzeichnet, dass** zwischen dem Betätigungselement (3) und der Greifeinheit (2) ein in Richtung der Bewegungsachse (6) beweglich gelagertes Übertragungselement (4) angeordnet ist.

8. Greifvorrichtung nach einem der vorhergehenden Ansprüche, **dadurch gekennzeichnet, dass** der Basis (8) ein Drehantrieb (22) zugeordnet ist, mittels dem die Greifvorrichtung (1) um die Bewegungsachse (6) drehbar ist.

9. Greifvorrichtung nach einem der vorhergehenden Ansprüche, **dadurch gekennzeichnet, dass** die Greifvorrichtung (1) über eine Halteeinrichtung mit einem entlang der Bewegungsachse (6) wirkenden Antrieb (20) verbunden und entlang der Bewegungsachse (6) gesteuert verfahrbar ist.

10. Verwendung der Greifvorrichtung (1) nach einem der vorhergehenden Ansprüche in einer tiefkalten Umgebung.

## Claims

1. A gripping device (1) for gripping and depositing objects (24) along at least one axis of movement (6), comprising:
- a gripping unit (2) comprising at least two gripping fingers (2.1) and coupling members (2.2) for advancing the gripping fingers (2.1) in an advancing direction (5) substantially perpendicular to the axis of movement (6),
- a guide sleeve (7), which is directed coaxially to the axis of movement (6) and at whose first end (7.1) the gripping unit (2) is arranged and whose second end (7.2) is connected to a base (8) consisting at least partially of a magnetic material,
- a sliding sleeve (9) arranged around the guide sleeve (7) and slidable along a section of the guide sleeve (7) coaxially to the axis of movement (6),
- a piston (10), which is arranged in the guide sleeve (7) so as to be movable coaxially to the axis of movement (6) and rigidly connected to the sliding sleeve (9), said piston (10) comprising a permanent magnet (11) at the end of the piston (10) facing the base (8) and a mechanical connection of the piston (10) with the coupling members (2.2) at the other end of the piston (10), which piston (10) can be advanced to a holding position (13), in which the piston (10) is held by a first magnetic force (16) resulting from magnetic interactions of the permanent magnet (11) with the magnetic material of the base (8), and the gripping fingers (2.1) are advanced by the coupling members (2.2), and
- an electric coil (14) assigned to the base (8), whose energization allows a second magnetic force (17) to be generated, which is opposed to the first magnetic force (16), so that the first magnetic force (16) is then advancedd by the second magnetic force (17).

2. The gripping device according to claim 1, **characterised in that**, when the piston (10) is in the holding position (13), the gripping device (1) is in a gripping state in which the gripping fingers (2.1) are advanced away from the axis of movement (6) by the coupling members (2.2), so that an object (24) can be gripped by the advanced gripping fingers (2.1) at a free inner contour of the object (24).

3. The gripping device according to claim 2, **characterised in that** a first return spring (18) is arranged between the base (8) and a front face of the sliding sleeve (9) facing the base (8), said return spring (18) pushing the sliding sleeve (9) a first return distance (18.1) away from the base (8), when the first magnetic force (16) is advancedd by the second magnetic force (17).

4. The gripping device according to claim 2 or 3, **characterised in that** a bobbin (15), around which the electric coil (14) is arranged, is formed by at least part of the magnetic material of the base (8).

5. The gripping device according to claim 4, **characterised in that** the bobbin (15) is supported so as to be movable along the axis of movement (6).

6. The gripping device according to claim 5, **characterised in that** the gripping unit (2) is actuated by an actuating element (3) which is rigidly connected to the guide sleeve (7).

7. The gripping device according to claim 6, **characterised in that** a transmission element (4), supported so as to be movable in the direction of the axis of movement (6), is arranged between the actuating element (3) and the gripping unit (2).

8. The gripping device according to any one of the preceding claims, **characterised in that** the base (8) has a rotary drive (22) assigned to it by means of which the gripping device (1) can be rotated about the axis of movement (6).

9. The gripping device according to any one of the preceding claims, **characterised in that** the gripping device (1) is connected, via a holding device, to a drive (20) acting along the axis of movement (6) and can be moved in a controlled manner along the axis of movement (6).

10. Use of the gripping device (1) according to any one of the preceding claims in a cryogenic environment.

## Revendications

1. Dispositif de préhension (1) pour saisir et déposer des objets (24) le long d'au moins un axe de mouvement (6), ledit dispositif comportant:
- une unité de préhension (2) avec au moins deux doigts de préhension (2.1) et des organes d'accouplement (2.2) pour avancer les doigts de préhension (2.1) dans une direction d'avance (5) sensiblement perpendiculaire à l'axe de mouvement (6),
- un manchon de guidage (7), dirigé coaxialement à l'axe de mouvement (6), ledit manchon de guidage (7) présentant à sa première extrémité (7.1) l'unité de préhension (2) et étant relié par sa deuxième extrémité (7.2) à une base (8) constituée au moins partiellement d'un matériau magnétique,
- un manchon coulissant (9) disposé autour du manchon de guidage (7) et déplaçable coaxialement à l'axe de mouvement (6) le long d'une section du manchon de guidage (7),
- un piston (10), disposé dans le manchon de guidage (7) de manière à permettre son déplacement coaxial par rapport à l'axe de mouvement (6) et relié de manière rigide au manchon coulissant (9), ledit piston (10) comportant un aimant permanent (11) à l'extrémité du piston (10) tournée vers la base (8) et une connexion mécanique du piston (10) aux organes d'accouplement (2.2) à l'autre extrémité du piston (10), le piston (10) pouvant être avancé vers une position de maintien (13), dans laquelle le piston (10) est maintenu par une première force magnétique (16) résultant des interactions magnétiques de l'aimant permanent (11) avec le matériau magnétique de la base (8), et les doigts de préhension (2.1) étant avancés par les organes d'accouplement (2.2), et
- une bobine électrique (14) attribuée à la base (8), dont l'alimentation en courant permet de générer une deuxième force magnétique (17), opposée à la première force magnétique (16), de sorte que la première force magnétique (16) soit alors éliminée par la deuxième force magnétique (17).

2. Dispositif de préhension selon la revendication 1, **caractérisé en ce que** le dispositif de préhension (1) se trouve dans un état de préhension lorsque le piston (10) est en position de maintien (13), état dans lequel les doigts de préhension (2.1) sont avancés par les organes d'accouplement (2.2) pour s'éloigner de l'axe de mouvement (6), de manière à permettre aux doigts de préhension (2.1) avancés de saisir un objet (24) par le contour intérieur libre dudit objet (24).

3. Dispositif de préhension selon la revendication 2, **caractérisé en ce qu'**un premier ressort de rappel (18) est disposé entre la base (8) et un front du manchon coulissant (9) tourné vers la base (8), ledit ressort de rappel (18) poussant le manchon coulissant (9) sur une première distance de rappel (18.1) à partir de la base (8) lorsque la première force magnétique (16) est éliminée par la deuxième force magnétique (17).

4. Dispositif de préhension selon la revendication 2 ou 3, **caractérisé en ce qu'**un noyau de bobine (15), autour duquel la bobine électrique (14) est disposée, est constitué par au moins une partie du matériau magnétique de la base (8).

5. Dispositif de préhension selon la revendication 4, **caractérisé en ce que** le noyau de bobine (15) est supporté de manière mobile le long de l'axe de mouvement (6).

6. Dispositif de préhension selon la revendication 5, **caractérisé en ce que** l'unité de préhension (2) est actionnée par un élément d'actionnement (3) relié rigidement au manchon de guidage (7).

7. Dispositif de préhension selon la revendication 6, **caractérisé en ce qu'**un élément de transmission (4), supporté de manière mobile dans la direction de l'axe de mouvement (6), est disposé entre l'élément d'actionnement (3) et l'unité de préhension (2).

8. Dispositif de préhension selon l'une quelconque des revendications précédentes, **caractérisé en ce qu'**un entrâinement rotatif (22) est attribué à la base (8), permettant la rotation du dispositif de préhension (1) autour de l'axe de mouvement (6).

9. Dispositif de préhension selon l'une quelconque des revendications précédentes, **caractérisé en ce que** le dispositif de préhension (1) est relié, par un dispositif de maintien, à un entraînement (20) agissant le long de l'axe de mouvement (6) et est déplaçable par commande le long de l'axe de mouvement (6).

10. Utilisation du dispositif de préhension (1) selon l'une quelconque des revendications précédentes dans un milieu cryogénique.
